# EUROPÄISCHE PATENTSCHRIFT

(11) **EP 4 068 030 B1**
(45) Veröffentlichungstag und Bekanntmachung des Hinweises auf die Patenterteilung: **11.09.2024**
(21) Anmeldenummer: 22164610.2
(22) Anmeldetag: 28.03.2022
(51) Int. Cl.: G05B 23/02

(54) **VERPACKUNGSANLAGE UND VERFAHREN MIT FEHLERANALYSE**
PACKAGING SYSTEM AND METHOD WITH FAULT ANALYSIS
INSTALLATION D'EMBALLAGE ET PROCÉDÉS D'ANALYSE DES DÉFAUTS

(30) Priorität: 29.03.2021 DE 102021107878
(43) Veröffentlichungstag der Anmeldung: 05.10.2022
(73) Patentinhaber: MULTIVAC Sepp Haggenmüller SE & Co. KG, 87787 Wolfertschwenden (DE)
(72) Erfinder: STEIDELE, Jürgen, 87749 Hawangen (DE); ROTH, Martin, 87527 Ofterschwang (DE)
(74) Vertreter: Grünecker Patent- und Rechtsanwälte PartG mbB

(56) Entgegenhaltungen:
- EP-A1- 2 075 661
- WO-A1-2005/031485
- DE-A1- 102017 007 909
- DE-A1- 102018 122 213

## Beschreibung

Die Erfindung bezieht sich auf eine Verpackungsanlage mit den Merkmalen des Oberbegriffs von Anspruch 1 sowie auf ein Verfahren zum Betrieb einer Verpackungsanlage.

Als Verpackungsanlage wird eine Anlage verstanden, die mindestens eine Verpackungsmaschine aufweist (d.h. eine Maschine, in der Produkte in Verpackungsmaterial verpackt werden) sowie zusätzlich zur Verpackungsmaschine mindestens eine weitere Komponente. Bei dieser weiteren Komponente kann es sich im Kontext der Erfindung um jegliche Maschine oder Station handeln, die auf irgendeine Weise auf die Produkte und/oder auf das Verpackungsmaterial einwirkt. Beispielsweise kann es sich bei der zusätzlichen Komponente um eine Transporteinrichtung zum Transportieren von Produkten handeln, beispielsweise um einen Zuförderer, ein Transportband, einen Umsetz-Roboter, wie beispielsweise einen Delta- oder Scara-Roboter o.ä. Bei der weiteren Komponente kann es sich beispielsweise auch um eine Druckvorrichtung zum Aufbringen eines Drucks auf Verpackungsmaterial, um eine Prüfvorrichtung wie ein Vision-System oder einen Check-Weigher, oder auch um einen Etikettierer handeln. Bei der zusätzlich zur Verpackungsmaschine vorgesehenen Komponente der Verpackungsanlage kann es sich auch um einen Befüller zum Befüllen von Verpackungen mit einem Produkt handeln. Zusätzlich zur mindestens einen Verpackungsmaschine kann die Verpackungsanlage eine oder auch mehrere solcher zusätzlichen Komponenten aufweisen.

Verpackungsanlagen mit einer Verpackungsmaschine und mindestens einer weiteren Komponente gehen beispielsweise aus der DE 10 2018 222 397 A1, der DE 10 2018 214 761 A1 oder der DE 10 2017 124 650 A1 hervor.

Solche Verpackungsanlagen haben typischerweise eine Nennleistung, d.h. eine im störungsfreien Normalbetrieb erreichbare Leistung, d.h. eine Anzahl fertig hergestellter Verpackungen pro Zeiteinheit (beispielsweise pro Minute). Die tatsächliche Leistung der Verpackungsanlage kann Schwankungen unterworfen sein und insbesondere um die Nennleistung herum schwanken. Kritisch wird es, wenn eine Minderleistung auftritt. Im Kontext der Erfindung kann eine "Minderleistung" definiert sein als eine Leistung von beispielsweise 95% oder weniger der Nennleistung, oder von 90% oder weniger der Nennleistung. Ein Spezialfall einer Minderleistung ist ein Stopp der Verpackungsanlage, d.h. eine Reduktion der momentanen Leistung der Verpackungsanlage auf Null. Eine Minderleistung oder gar ein Stopp der Verpackungsanlage kann eine Vielzahl von Ursachen haben.

Die WO 2005/031485 A1 offenbart eine Anzeige- und Bedieneinheit für eine Maschine der tabakverarbeitenden Industrie. Wenn ein Maschinenstopp erfolgt, wird dem Bediener in einem Meldungsbereich eines Displays ein Grund für den Maschinenstopp angezeigt. Die EP 2 075 661 A1 beschriebt eine Verpackungslinien-Architektur, bei der eine Leistungsanalyse in Echtzeit erfolgen soll. Die DE 10 2017 007 909 A1 beschreibt eine Produktionssteuerung für Fertigungseinrichtungen, bei der Ursachen für einen Stopp des Produktionssystems erkannt werden sollen. Die DE 10 2018 122 213 A1 beschreibt eine weitere Vorrichtung zur Überwachung und Dokumentation von Fertigungsprozessen, bei denen ein Bediener manuell Fehlerquellen in eine Liste eintragen kann.

Die Aufgabe der vorliegenden Erfindung liegt darin, eine Verpackungsanlage und ein Verfahren zum Betrieb einer Verpackungsanlage dahingehend zu verbessern, dass die mittlere Leistungsfähigkeit der Verpackungsanlage erhöht wird.

Diese Aufgabe wird gelöst durch eine Verpackungsanlage mit den Merkmalen des Anspruchs 1 bzw. durch ein Verfahren zum Betrieb einer Verpackungsanlage mit den Merkmalen des Anspruchs 7. Vorteilhafte Weiterbildungen der Erfindung sind Gegenstand der abhängigen Ansprüche.

Erfindungsgemäß ist die Verpackungsanlage dazu konfiguriert, auf dem Display eine Leistungsgrafik darzustellen. Die Leistungsgrafik zeigt, vorzugsweise in Echtzeit, eine aktuelle Leistung der Verpackungsanlage an, vorzugsweise auch den Verlauf der tatsächlich erreichten Leistung über einen bestimmten Zeitraum in die Vergangenheit zurückreichend. Beispielsweise könnte die Leistung in Prozent der Nennleistung dargestellt werden. Zum Ermitteln der Leistung kann z.B. bei intermittierend arbeitenden Verpackungsmaschinen oder Verpackungsanlagen die Anzahl der Takte in einem vorgegebenen Zeitraum herangezogen werden, multipliziert mit der Anzahl der in einem Format bzw. in einem Takt erzeugten Verpackungen.

Erfindungsgemäß weist die Rechnereinheit der Verpackungsanlage eine Fehleranalysesektion auf, die dazu ausgebildet ist, einen Stopp oder eine Minderleistung der Verpackungsanlage zu erkennen. Wie eingangs dargelegt, kann eine Minderleistung beispielsweise definiert sein als eine Leistung von maximal 95% oder maximal 90% der Nennleistung der Verpackungsanlage. Allgemein kann die Minderleistung als eine tatsächliche Leistung unterhalb einer bestimmten Leistungsschwelle angesehen werden. Ein Stopp der Verpackungsanlage führt zu einer Leistung von Null und somit zu einem Extremfall einer Minderleistung.

Die Fehleranalysesektion ist dazu ausgebildet, beim Erkennen eines Stopps oder allgemein einer Minderleistung aus einer in einem Speicher gespeicherten Fehlerquellenliste eine für den betreffenden Stopp oder die Minderleistung ursächliche Fehlerquelle zu identifizieren. Die Fehlerquellenliste kann eine beliebige, diskrete Anzahl von potenziellen Fehlerquellen enthalten. Die Fehlerquellenliste kann in Form einer Liste, eines Arrays, einer Tabelle o.ä. gespeichert sein. Sie kann vorzugsweise die häufigsten Fehlerquellen enthalten, die für einen Stopp oder eine Minderleistung ursächlich sein können. Das Identifizieren der ursächlichen Fehlerquelle kann unter Berücksichtigung der Information erfolgen, ob die Verpackungsmaschine oder eine bestimmte andere Komponente der Verpackungsanlage den Stopp oder die Minderleistung verursacht hat, beispielsweise anhand von dort erhaltener Steuer- oder Sensorsignale.

Schließlich ist die Verpackungsanlage dazu konfiguriert, die ermittelte Fehlerquelle auf dem Display anzuzeigen. Dies erlaubt es dem Bediener der Verpackungsanlage, unmittelbar die Fehlerquelle und die den Fehler verursachende Komponente bzw. Maschine zu identifizieren, ohne länger danach suchen zu müssen. Dies beschleunigt das Beheben des Fehlers und verringert Standzeiten oder Zeiten einer Minderleistung der Verpackungsanlage, was insgesamt die mittlere Leistungsfähigkeit der Verpackungsanlage deutlich erhöht. Die Verpackungsanlage kann auch dazu konfiguriert sein, eine Auswertung oder Statistik von Minderleistungen und ihren Ursachen zu erzeugen. Dies erlaubt es, den Betrieb der Verpackungsanlage weiter zu optimieren, beispielsweise indem systematisch Ursachen für besonders häufige Fehlerquellen identifiziert und diese Ursachen durch Gegenmaßnahmen vermieden werden.

Zu einem Stopp führende Fehlerquellen können beispielsweise der komplette Ausfall (oder Stromlosigkeit) einer Komponente oder der Verpackungsmaschine sein, oder das Erreichen eines Folienendes (kein Material mehr) einer Unter- oder einer Deckelfolie.

Nicht zu einem Stopp, aber zu einer Minderleistung führende Fehlerquellen können beispielsweise sein:
a) Vorwarnung von Etikettenbandende oder Folienende, bevor das Ende erreicht wird
b) Etikettierer nicht aktiv/bereit, im Fall wenn zwei Etikettierer (redundantes System) bereit stehen müssen, aber nur einer zum Etikettieren in Betrieb ist. (beim Anderen könnte während der Wartezeit die Etikettenrolle erneuert werden)
c) Warten auf Rückmeldung von Komponenten (z.B. Bereit- oder Fertigsignal fehlt)
d) Evakuierzeit ist überschritten, die IST-Zeit für das Evakuieren war länger als die SOLL-Zeit

Im Kontext der Erfindung sind "Meldungen" der Anlage oder ihrer Komponenten als synonym mit "Fehler" zu verstehen, sofern sie sich auf das Melden eines Ereignisses oder eines Zustands beziehen, die zu einem Stopp oder zu einer Minderleistung geführt haben. Die gespeicherte Fehlerquellenliste kann demnach auch eine Liste potentieller Meldungen sein oder umfassen.

Vorzugsweise ist die Fehleranalysesektion dazu konfiguriert, einen Zeitstempel in Zuordnung zu einem erkannten Stopp oder einer erkannten Minderleistung der Verpackungsanlage zu speichern. Beim Zeitstempel kann es sich um die Uhrzeit (in Stunden, Minuten, ggf. Sekunden), ggf. zuzüglich des Datums, desjenigen Zeitpunkts handeln, zu dem ein Stopp oder eine Minderleistung eingetreten sind oder erkannt wurden. Der Zeitstempel kann auch die Dauer eines Stopps oder einer Minderleistung angeben. Zuordnung bedeutet in diesem Zusammenhang, dass der Zeitstempel einem bestimmten Stopp bzw. einer bestimmten Minderleistung zugeordnet ist.

Als vorteilhaft für die Handhabung hat es sich herausgestellt, wenn die Leistungsgrafik eine Darstellung einer Leistung der Verpackungsanlage oder der Verpackungsmaschine über einer Zeitachse umfasst. In einer solchen, zweidimensionalen Darstellung kann somit der Verlauf der Leistung über einen gewissen Zeitraum abgelesen werden.

In einer Variante der Verpackungsanlage ist wenigstens ein Sensor mit der Rechnereinheit verbunden. Der Rechner kann Parameter überwachen und in Form von Sensorsignalen an die Rechnereinheit melden, die Rückschlüsse auf eine Leistung, eine Minderleistung, einen Stopp oder auf den einem Stopp oder einer Minderleistung zugrundeliegenden Fehler erlauben, beispielsweise Temperaturen, elektrische Ströme, elektrische Spannungen, mechanische Spannungen, Drücke etc. Innerhalb der Rechnereinheit kann das vom Sensor erhaltene Signal der Fehleranalysesektion zugeleitet werden.

Die Verpackungsanlage kann ferner dazu konfiguriert sein, auf dem Display Störungsmeldungen und/oder Warnhinweise anzuzeigen. Dies erleichtert dem Bediener das Erkennen einer Störung.

In einer Ausführungsform kann das Display an oder in der Verpackungsmaschine angeordnet sein. Dies hat den Vorteil, dass sich der Bediener häufig an der Verpackungsmaschine oder in ihrer Nähe aufhalten wird und das Display hier gut einsehen kann. Alternativ oder zusätzlich kann sich das oder ein weiteres Display allerdings auch entfernt von der Verpackungsmaschine befinden, beispielsweise in einem Bedienraum, in dem das Display über ein Datennetzwerk (drahtgebunden oder drahtlos) oder eine Cloud-Verbindung mit der Verpackungsmaschine und der oder den zusätzlichen Komponenten der Verpackungsanlage verbunden sein kann, oder auf einem mobilen Endgerät.

Gleiches gilt für die Rechnereinheit oder deren Fehleranalysesektion. Auch die Rechnereinheit und/oder die Fehleranalysesektion können an oder in der Verpackungsmaschine oder an oder in einer der weiteren Komponenten der Verpackungsanlage angeordnet sein. Alternativ können sich die Rechnereinheit und/oder die Fehleranalysesektion (oder Teile davon) auch entfernt von der Verpackungsmaschine befinden, beispielsweise in einem Bedienraum oder auf einem mobilen Endgerät, und über eine drahtgebundene oder drahtlose Datenverbindung in die Verpackungsanlage eingebunden sein.

Die Erfindung bezieht sich auch auf ein Verfahren zum Betrieb einer Verpackungsanlage, bei dem auf einem Display der Verpackungsanlage eine Leistungsgrafik dargestellt wird, in einem Speicher eine Fehlerquellenliste gespeichert wird, eine Fehleranalysesektion einer Rechnereinheit bei einem Stopp oder einer Minderleistung der Verpackungsanlage aus der Fehlerquellenliste eine für den betreffenden Stopp oder die Minderleistung ursächliche Fehlerquelle identifiziert und die ermittelte Fehlerquelle schließlich auf dem Display angezeigt wird. Damit ergeben sich die eingangs geschilderten Vorteile.

Zweckmäßig ist es, wenn die Fehlerquellenliste editierbar ist. Insbesondere können auf diese Weise Fehlerquellen konkretisiert und/oder zusätzliche Fehlerquellen zu der Liste hinzugefügt werden. Das Editieren der Fehlerquellenliste kann vorzugsweise vom Display aus erfolgen.

Vorzugsweise umfasst die Leistungsgrafik eine Darstellung einer Leistung der Verpackungsanlage oder der Verpackungsmaschine über einer Zeitachse, wiederum mit den vorstehend geschilderten Vorteilen.

Denkbar ist es, dass die Leistungsgrafik kontinuierlich oder taktweise aktualisiert wird. Sofern die Verpackungsmaschine oder die Verpackungsanlage insgesamt intermittierend bzw. taktweise arbeiten, kann das taktweise Aktualisieren der Leistungsgrafik synchronisiert sein mit dem Arbeitstakt der Verpackungsanlage oder -maschine.

In einer Weiterbildung ist es denkbar, dass in der oder zusammen mit der Leistungsgrafik Rezeptwechsel und/oder Parameterveränderungen auf dem Display angezeigt werden. Dies vergrößert den Informationsumfang, der dem Bediener zur Verfügung gestellt wird, und kann das Auffinden eines Fehlers weiter erleichtern.

Denkbar ist es ferner, dass ein Zeitpunkt des Eintretens eines Stopps oder einer Minderleistung aufgezeichnet und gespeichert wird, idealerweise in Zuordnung zu einem bestimmten Stopp oder einer Minderleistung. Zusätzlich oder alternativ ist es denkbar, dass ein Zeitraum oder die Dauer eines Stopps oder einer Minderleistung aufgezeichnet und gespeichert werden, erneut idealerweise in Zuordnung zu einem betreffenden Stopp oder einer Minderleistung.

Bei der Verpackungsmaschine kann es sich beispielsweise um eine Schalenverschließmaschine (Traysealer) oder um eine Tiefziehverpackungsmaschine handeln. Denkbar wäre es auch, dass die Verpackungsmaschine vom Typ einer Kammermaschine oder Kammerbandmaschine ist.

Im Folgenden werden vorteilhafte Ausführungsformen der Erfindung anhand einer Zeichnung näher erläutert. Im Einzelnen zeigen:
- Fig. 1: ein Ausführungsbeispiel einer Verpackungsanlage mit einer Schalenverschließmaschine,
- Fig. 2: ein zweites Ausführungsbeispiel einer Verpackungsanlage mit einer Tiefziehverpackungsmaschine,
- Fig. 3: eine schematische Darstellung der Verpackungsanlage und
- Fig. 4: ein Ausführungsbeispiel einer Leistungsgrafik.

Gleiche Komponenten sind in den Figuren durchgängig mit gleichen oder einander entsprechenden Bezugszeichen versehen.

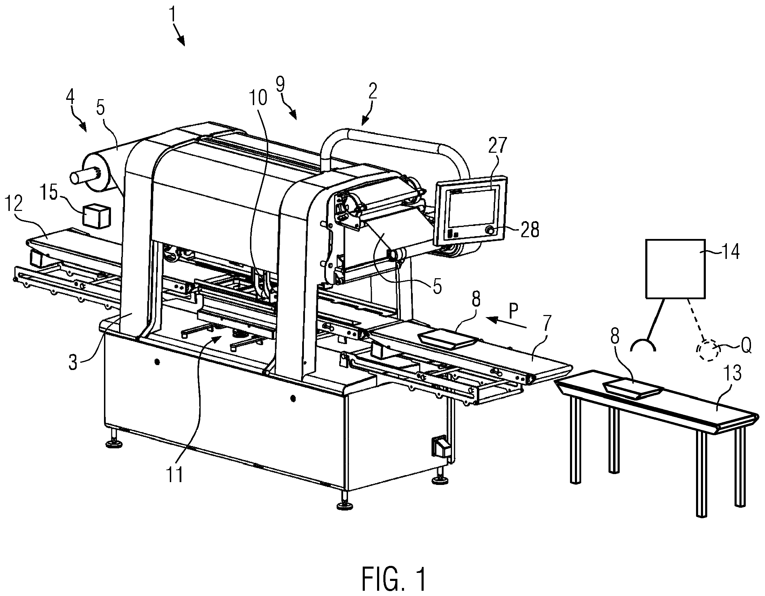

Fig. 1 zeigt ein erstes Ausführungsbeispiel einer Verpackungsanlage 1. Die Verpackungsanlage 1 umfasst eine Verpackungsmaschine 2, bei der es sich im vorliegenden Ausführungsbeispiel um eine Schalenverschließmaschine (Traysealer) handelt. Die Verpackungsmaschine 2 umfasst ein Gestell 3, das eine Vorratsrolle 4 einer Deckelfolie 5 tragen kann. Die Verpackungsmaschine 1 weist ferner ein Zuführband 7 auf, mittels dessen befüllte aber zu diesem Zeitpunkt noch unverschlossene Schalen 8 einer Verschließstation 9 der Verpackungsmaschine 2 zugeführt werden können. Die Schalen 8 können mittels einer Greifereinrichtung 10 in einer Produktionsrichtung P in die Verschließstation 9 umgesetzt werden und dort mit der von oben zugeführten Deckelfolie 5 (Folie) verschlossen werden, beispielsweise durch Ansiegeln der Deckelfolie 5 an die Schalen 8. Zu diesem Zweck kann die Verschließstation 9 ein Siegelwerkzeug 11 umfassen. Die versiegelten und damit fertiggestellten Verpackungen können über die Greifereinrichtung 10 aus der Verschließstation 9 auf ein Abführband 12 umgesetzt werden.

Zusätzlich zu der Verpackungsmaschine 2 weist die Verpackungsanlage 1 eine oder mehrere weitere Komponenten auf, im vorliegenden Beispiel ein Transportband 13, einen Befüller 14 und eine Prüfvorrichtung 15. Das Transportband 13 dient zum Fördern von unverschlossenen Schalen 8 während ihres Befüllens mit einem Produkt Q. Eine Befüllvorrichtung 14 in der Umgebung des Transportbandes 13 dient dazu, die Produkte Q aufzunehmen und in die Schalen 8 umzusetzen. Dazu kann die Befüllvorrichtung 14 beispielsweise als Sauggreifer, als Transfer-Roboter oder auch als (ggf. intermittierend arbeitende) Schüttvorrichtung konfiguriert sein. In Transportrichtung P stromabwärts der Verschließstation 9 befindet sich eine Prüfvorrichtung 15, beispielweise ein Vision-System, ein Metalldetektor oder ein Check-Weigher. Die Prüfvorrichtung 15 dient dazu, Eigenschaften der fertigen Verpackungen oder der darin verpackten Produkte zu ermitteln.

An der Verpackungsmaschine 2 ist ein Display 27 angeordnet. Es verfügt über Bedienelemente 28.

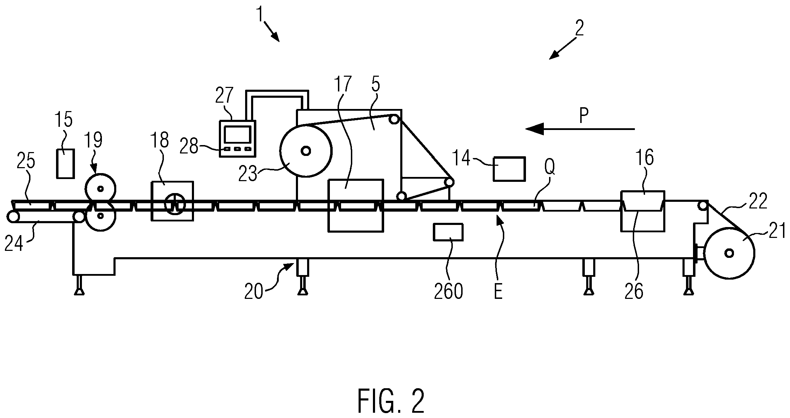

Fig. 2 zeigt ein zweites Ausführungsbeispiel einer Verpackungsanlage 1, diesmal mit einer Verpackungsmaschine 2 in Form einer Tiefziehverpackungsmaschine. Die Tiefziehverpackungsmaschine 2 weist eine Formstation 16, eine Siegelstation 17, eine Querschneideeinrichtung in Form einer Folienstanze 18 und eine Längsschneideeinrichtung 19 auf, die in dieser Reihenfolge in einer Produktionsrichtung R an einem Maschinenrahmen 20 angeordnet sind. Eingangsseitig befindet sich an dem Maschinenrahmen 20 eine Zufuhrrolle 21, von der eine Folienbahn 22 abgezogen wird. Im Bereich der Siegelstation 17 ist ein Materialspeicher 23 vorgesehen, von dem eine Deckelfolie 5 abgezogen wird. Ausgangsseitig ist an der Tiefziehverpackungsmaschine 2 eine Abfuhreinrichtung 24 in Form eines Transportbandes vorgesehen, mit der fertige, vereinzelte Verpackungen 25 abtransportiert werden. Ferner weist die Tiefziehverpackungsmaschine 2 eine Vorschubeinrichtung auf, die die Folienbahn 16 ergreift und diese pro Hauptarbeitstakt in der Produktionsrichtung P weitertransportiert. Die Vorschubeinrichtung kann zum Beispiel durch beidseitig angeordnete Klammerketten ausgeführt sein.

In der dargestellten Ausführungsform ist die Formstation 16 als eine Tiefziehstation ausgebildet, bei der in die Folienbahn 22 durch Tiefziehen Mulden 26 geformt werden. Dabei kann die Formstation 16 derart ausgebildet sein, dass in der Richtung senkrecht zur Produktionsrichtung R mehrere Mulden 26 nebeneinander gebildet werden. In Produktionsrichtung P hinter der Formstation 16 ist eine Einlegestrecke E vorgesehen, in der die in der Folienbahn 16 geformten Mulden 26 mittels eines zusätzlich zur Verpackungsmaschine 2 vorgesehenen Befüllers 14 mit Produkten Q befüllt werden.

Die Querschneideeinrichtung 18 ist als Folienstanze ausgebildet, die die Folienbahn 22 und die Deckelfolie 5 in einer Richtung quer zur Produktionsrichtung P zwischen benachbarten Mulden 26 durchtrennt. Dabei arbeitet die Folienstanze 18 derart, dass die Folienbahn 22 nicht über die gesamte Breite aufgetrennt wird, sondern zumindest in einem Randbereich nicht durchtrennt wird. Dies ermöglicht einen kontrollierten Weitertransport durch die Vorschubeinrichtung.

Die Längsschneideeinrichtung 19 ist in der dargestellten Ausführungsform als eine Messeranordnung mit mehreren rotierenden Rundmessern ausgebildet, mit der die Folienbahn 22 und die Deckelfolie 5 zwischen benachbarten Mulden 26 und am seitlichen Rand der Folienbahn 22 durchtrennt werden, so dass hinter der Längsschneideeinrichtung 19 vereinzelte Verpackungen 25 vorliegen.

Die Tiefziehverpackungsmaschine 2 verfügt ferner über eine Steuerung 260. Sie hat die Aufgabe, die in der Tiefziehverpackungsmaschine 2 ablaufenden Prozesse zu steuern und zu überwachen. Ein hier an der Tiefziehverpackungsmaschine 2 angeordnetes Display 27 mit Bedienelementen 28 dient zum Visualisieren bzw. Beeinflussen der Prozessabläufe in der Tiefziehverpackungsmaschine 2 für bzw. durch einen Bediener.

Zusätzlich zur Verpackungsmaschine 2 kann die Verpackungsanlage 1 neben dem Befüller auch eine Prüfvorrichtung 15 aufweisen, optional auch weitere zusätzliche Komponenten.

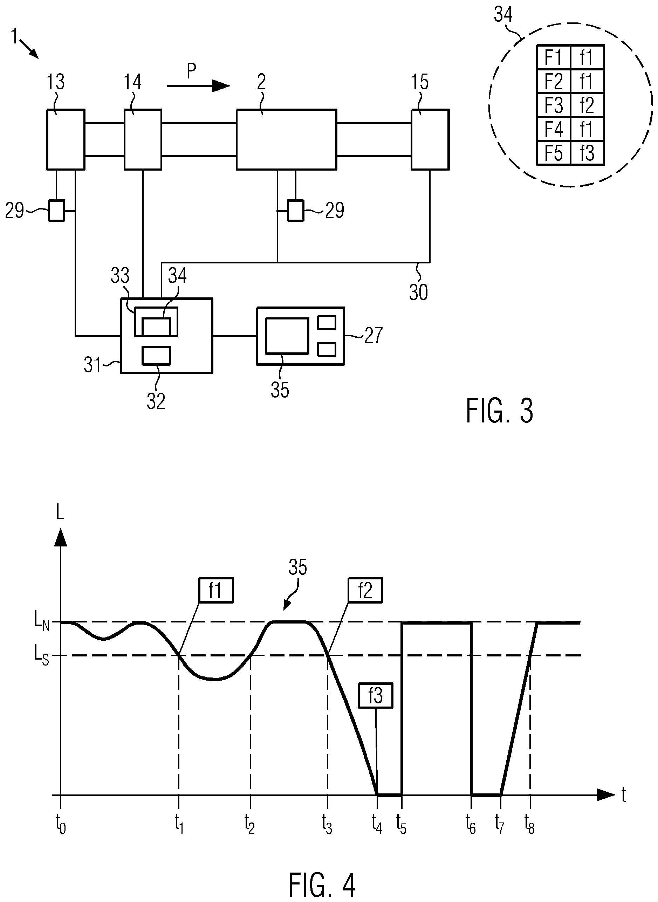

Fig. 3 zeigt noch einmal schematisch die Verpackungsanlage 1 mit der Verpackungsmaschine 2 und zusätzlich zur Verpackungsmaschine 2 vorgesehenen Komponenten 13, 14, 15. Schematisch ist angedeutet, dass an oder in der Verpackungsmaschine 2 sowie an oder in dem Transportband 13 jeweils ein Sensor 29 vorgesehen ist, mittels dessen wenigstens ein Parameter der zugehörigen Maschine 2 oder Komponente überwacht wird.

Über Daten- und Steuerleitungen 30 sind die Verpackungsmaschine 2 sowie die zusätzlichen Komponenten 13, 14, 15 und die Sensoren 29 verbunden mit einer Rechnereinheit 31. Bei der Rechnereinheit kann es sich um einen Steuercomputer für die Verpackungsanlage 1 handeln. Die Rechnereinheit weist eine Fehleranalysesektion 32 sowie einen Speicher 33 auf, in dem eine Fehlerquellenliste 34 gespeichert ist. Die auch in einer Vergrößerung gezeigte Fehlerquellenliste 34 kann eine Anzahl verschiedener Fehler F1, F2, F3, ... umfassen, wobei jedem Fehler F1, F2, F3 eine bestimmte oder eine wahrscheinlichste Fehlerquelle f1, f2, f3, ... zugeordnet ist. Es ist durchaus denkbar, dass verschiedenen Fehlern F1, F2, F4 dieselbe Fehlerquelle f1 zugeordnet ist. Bei einer Fehlerquelle f1, f2, f3 kann es sich um eine bestimmte Komponente 2, 13, 14, 15 der Verpackungsanlage 1 oder aber um eine bestimmte Störung innerhalb einer solchen Komponente handeln.

Auf dem mit der Rechnereinheit 31 verbundenen Display 27 der Verpackungsanlage 1 ist eine Leistungsgrafik 35 darstellbar, die in vergrößerter Form in Fig. 4 zu sehen ist. Die Leistungsgrafik 35 stellt eine Leistung der Verpackungsanlage 1 über einen bestimmten Zeitraum dar, und zwar als Leistung L (Verpackungen pro Zeiteinheit) über einer Zeitachse t. Wie eingangs erläutert, verfügt die Verpackungsanlage 1 über eine Nennleistung L_{N}, die sie im störungsfreien Normalbetrieb erreichen kann oder erreichen soll. Abhängig von verschiedenen Faktoren kann die tatsächlich erreichte Leistung L(t) schwanken, wie in Fig. 4 dargestellt.

Eine Leistung L unterhalb einer bestimmten Leistungsschwelle Ls wird als Minderleistung aufgefasst. Die Fehleranalysesektion 32 der Verpackungsanlage 1 ist dazu ausgebildet, den Zeitpunkt des Eintretens einer Minderleistung zu erkennen.

Im Beispiel gemäß Fig. 4 startet die Verpackungsanlage 1 zum Zeitpunkt to mit ihrer Nennleistung. Beim Zeitpunkt t₁ sinkt die Leistung L erstmalig unter die Leistungsschwelle Ls. Bis zum Zeitpunkt t₂ besteht eine Minderleistung der Verpackungsanlage 1, erst danach steigt die Leistung L wieder über die Leistungsschwelle Ls.

Zum Zeitpunkt t₃ sinkt die Leistung der Verpackungsanlage 1 erneut unter die Leistungsschwelle Ls bis zu einem vollständigen Stopp am Zeitpunkt t₄. Erst zum Zeitpunkt t₅ arbeitet die Verpackungsanlage 1 wieder, und zwar mit ihrer Nennleistung L_{N}. Zum Zeitpunkt t₆ tritt ein schlagartiger Stopp auf, d.h. die Leistung L reduziert sich auf Null. Zum Zeitpunkt t₇ beginnt die Verpackungsanlage 1 wieder zu arbeiten; zum Zeitpunkt t₈ wird die Leistungsschwelle Ls überschritten.

Eine Minderleistung, d.h. eine Leistung L unterhalb der Schwelle Ls tritt somit zwischen den Zeitpunkten t₁ und t₂, den Zeitpunkten t₃ und t₅ und den Zeitpunkten t₆ und t₈ auf. Ein Stopp der Verpackungsanlage 1 liegt zwischen den Zeitpunkten t₄ und t₅ sowie zwischen den Zeitpunkten t₆ und t₇ vor.

Sobald die Fehleranalysesektion 32 einen (wahrscheinlichsten) Grund für den Eintritt eines bestimmten Stopps oder einer Minderleistung erkannt hat, d.h. die dafür ursächliche Fehlerquelle f1, f2, f3, wird die ermittelte Fehlerquelle f1, f2, f3 auf dem Display 27 angezeigt, und zwar innerhalb der Leistungsgrafik 35. Fig. 4 zeigt exemplarisch, wie dies erfolgen kann. Jeder Zeitpunkt des Eintritts einer Minderleistung oder eines Stopps t₁, t₃, t₄ ist mit einer Anzeige der dafür als ursächlich erkannten Fehlerquelle f1, f2, f3 verbunden, wie in Fig. 4 angedeutet. Der Übersichtlichkeit halber wurde eine ermittelte Fehlerquelle für den Eintritt des Stopps zum Zeitpunkt t₆ nicht mehr dargestellt. Innerhalb des Speichers 33 kann jeder von der Fehleranalysesektion 32 ermittelte Stopp bzw. jede Minderleistung zusammen mit einem zugeordneten Zeitstempel t₁, t₃, t₄, t₆ gespeichert werden. Zusätzlich oder alternativ besteht die Möglichkeit, die Zeitdauer jedes Stopps bzw. jeder Minderleistung aufzuzeichnen und zu speichern.

Die erfindungsgemäße Verpackungsanlage bzw. das erfindungsgemäße Verfahren können in vielfacher Weise verändert werden. Denkbar ist es, dass die Leistungsgrafik kontinuierlich oder taktweise aktualisiert wird. Es besteht die Möglichkeit, dass der Bediener mittels einer Zoom-Funktion bestimmte Zeiträume vergrößert darstellt oder aber größere Zeiträume darstellt, d.h. die Skalierung der Zeitachse t verändert. Es besteht auch die Möglichkeit für eine statistische Auswertung der ermittelten Fehler und Fehlerquellen sowie für ein Editieren der Fehlerquellenliste 34, beispielsweise über das Display 27 oder von externen Geräten aus.

## Patentansprüche

1. Verpackungsanlage (1) mit einer Verpackungsmaschine (2) und mindestens einer zusätzlich zur Verpackungsmaschine (2) vorgesehenen Komponente (13, 14, 15), wobei die Verpackungsanlage (1) ferner ein Display (27) und eine Rechnereinheit (31) aufweist,
wobei die Verpackungsanlage (1) dazu konfiguriert ist, auf dem Display (27) eine Leistungsgrafik (35) darzustellen, und die Rechnereinheit (31) eine Fehleranalysesektion (32) aufweist, die dazu ausgebildet ist, einen Stopp oder eine Minderleistung der Verpackungsanlage (1) zu erkennen,
**dadurch gekennzeichnet, dass**
die Fehleranalysesektion dazu ausgebildet ist, bei Erkennen eines Stopps oder einer Minderleistung aus einer in einem Speicher (33) gespeicherten Fehlerquellenliste (34) eine für den Stopp oder die Minderleistung ursächliche Fehlerquelle (f1, f2, f3) zu identifizieren,
wobei die Verpackungsanlage (1) ferner dazu konfiguriert ist, die ermittelte Fehlerquelle (f1, f2, f3) innerhalb der Leistungsgrafik (53) auf dem Display (27) anzuzeigen, wobei jeder Zeitpunkt des Eintritts einer Minderleistung oder eines Stopps (t₁, t₃, t₄) mit einer Anzeige der dafür als ursächlich erkannten Fehlerquelle (f1, f2, f3) verbunden ist.

2. Verpackungsanlage nach Anspruch 1, **dadurch gekennzeichnet, dass** die Fehleranalysesektion (32) dazu konfiguriert ist, einen Zeitstempel (t₁, t₃, t₄) in Zuordnung zu einem erkannten Stopp oder einer erkannten Minderleistung der Verpackungsanlage (1) zu speichern.

3. Verpackungsanlage nach einem der vorangehenden Ansprüche, **dadurch gekennzeichnet, dass** die Leistungsgrafik (35) eine Darstellung einer Leistung der Verpackungsanlage (1) oder der Verpackungsmaschine (2) über einer Zeitachse (t) umfasst.

4. Verpackungsanlage nach einem der vorangehenden Ansprüche, **dadurch gekennzeichnet, dass** wenigstens ein Sensor (29) mit der Rechnereinheit (31) verbunden ist.

5. Verpackungsanlage nach einem der vorangehenden Ansprüche, **dadurch gekennzeichnet, dass** die Verpackungsanlage (1) dazu konfiguriert ist, auf dem Display (27) Störungsmeldungen und/oder Warnhinweise anzuzeigen.

6. Verpackungsanlage nach einem der vorangehenden Ansprüche, **dadurch gekennzeichnet, dass** das Display (27) an oder in der Verpackungsmaschine (2) angeordnet ist.

7. Verfahren zum Betrieb einer Verpackungsanlage (1) mit einer Verpackungsmaschine (2) und mindestens einer zusätzlich zur Verpackungsmaschine (2) vorgesehenen Komponente (13, 14 ,15), wobei die Verpackungsanlage (1) ferner ein Display (27) und eine Rechnereinheit (31) aufweist,
wobei auf dem Display (27) eine Leistungsgrafik (35) dargestellt wird,
wobei die Rechnereinheit (31) eine Fehleranalysesektion (32) aufweist,
**dadurch gekennzeichnet, dass** in einem Speicher (33) eine Fehlerquellenliste (34) gespeichert wird,
dass die Fehleranalysesektion (32) bei einem Stopp oder einer Minderleistung der Verpackungsanlage (1) aus der Fehlerquellenliste (34) eine für den Stopp oder die Minderleistung ursächliche Fehlerquelle (f1, f2, f3) identifiziert,
und dass die ermittelte Fehlerquelle (f1, f2, f3) innerhalb der Leistungsgrafik (35) auf dem Display (27) angezeigt wird, wobei jeder Zeitpunkt des Eintritts einer Minderleistung oder eines Stopps (t₁, t₃, t₄) mit einer Anzeige der dafür als ursächlich erkannten Fehlerquelle (f1, f2, f3) verbunden ist.

8. Verfahren nach Anspruch 7, **dadurch gekennzeichnet, dass** die Fehlerquellenliste (34) editierbar ist.

9. Verfahren nach einem der Ansprüche 7 oder 8, **dadurch gekennzeichnet, dass** die Leistungsgrafik (35) eine Darstellung einer Leistung der Verpackungsanlage (1) oder der Verpackungsmaschine (3) über einer Zeitachse (t) umfasst.

10. Verfahren nach einem der Ansprüche 7 bis 9, **dadurch gekennzeichnet, dass** die Leistungsgrafik (35) kontinuierlich oder taktweise aktualisiert wird.

11. Verfahren nach einem der Ansprüche 7 bis 10, **dadurch gekennzeichnet, dass** in der oder zusammen mit der Leistungsgrafik (35) Rezeptwechsel und/oder Parameterveränderungen angezeigt werden.

12. Verfahren nach einem der Ansprüche 7 bis 11, **dadurch gekennzeichnet, dass** ein Zeitpunkt des Eintretens eines Stopps oder einer Minderleistung und/oder ein Zeitraum oder die Dauer eines Stopps oder einer Minderleistung aufgezeichnet und gespeichert werden.

## Claims

1. Packaging system (1) comprising a packaging machine (2) and at least one component (13, 14, 15) provided in addition to the packaging machine (2), the packaging system (1) further comprising a display (27) and a computer unit (31),
wherein the packaging system (1) is configured to display a performance graphic (35) on the display (27),
and the computer unit (31) comprises a fault analysis section (32) that is configured to detect a stop or an output deficit of the packaging system (1), **characterized in that** the fault analysis section (32) is configured when a stop or an output deficit is detected, to determine, from an error source list (34) stored in a memory (33), an error source (f1, f2, f3) being the cause of the stop or the output deficit,
wherein the packaging system (1) is further configured to indicate the determined error source (f1, f2, f3) within the performance graphic (35) on the display (27), wherein each point in time of the occurrence of an output deficit or a stop (t₁, t₃, t₄) is associated with displaying the error source (f1, f2, f3) recognized as being the cause for the output deficit or stop.

2. Packaging system according to claim 1, **characterized in that** the fault analysis section (32) is configured to store a time stamp (t₁, t₃, t₄) in association with a detected stop or a detected output deficit of the packaging system (1).

3. Packaging system according to any one of the preceding claims, **characterized in that** the performance graph (35) comprises a representation of an output of the packaging system (1) or the packaging machine (2) over a time axis (t).

4. Packaging system according to any one of the preceding claims, **characterized in that** at least one sensor (29) is connected to the computer unit (31).

5. Packaging system according to any one of the preceding claims, **characterized in that** the packaging system (1) is configured to display fault messages and/or warnings on the display (27).

6. Packaging system according to any one of the preceding claims, **characterized in that** the display (27) is arranged on or in the packaging machine (2).

7. Method for operating a packaging system (1) comprising a packaging machine (2) and at least one component (13, 14 ,15) provided in addition to the packaging machine (2), the packaging system (1) further comprising a display (27) and a computer unit (31),
wherein a performance graphic (35) is shown on the display (27),
wherein the computer unit (31) comprises a fault analysis section (32),
**characterized in that** an error source list (34) is stored in a memory (33),
that in the event of a stop or an output deficit of the packaging system (1), the fault analysis section (32) identifies from the error source list (34) an error source (f1, f2, f3) causing the stop or output deficit,
and that the determined error source (f1, f2, f3) is indicated within the performance graphic (35) on the display (27), wherein each point in time of the occurrence of an output deficit or a stop (t₁, t₃, t₄) is associated with displaying the error source (f1, f2, f3) recognized as being the cause for the output deficit or stop.

8. Method according to claim 7, **characterized in that** the error source list (34) is editable.

9. Method according to any one of claims 7 or 8, **characterized in that** the performance graph (35) comprises a representation of an output of the packaging system (1) or the packaging machine (3) over a time axis (t).

10. Method according to any one of claims 7 to 9, **characterized in that** the performance graph (35) is updated in at least one of a continuous manner and a cyclical manner.

11. Method according to one of claims 7 to 10, **characterized in that** at least one of recipe changes and parameter changes are displayed in or together with the performance graph (35).

12. Method according to any one of claims 7 to 11, **characterized in that**
at least one of a time of occurrence of one of a stop or an output deficit
and/or one of a period and a duration of one of a stop or an output deficit are recorded and stored.

## Revendications

1. Installation d'emballage (1) comprenant une machine d'emballage (2) et au moins un composant (13, 14, 15) prévu en plus de la machine d'emballage (2), l'installation d'emballage (1) comprenant en outre un écran (27) et une unité de calcul (31), l'installation d'emballage (1) étant configurée pour afficher un graphique de performance (35) sur l'écran (27),
et l'unité de calcul (31) présente une section d'analyse des défauts (32) qui est conçue pour détecter un arrêt ou une baisse de performance de l'installation d'emballage (1), **caractérisé en ce que** la section d'analyse des défauts est conçue pour identifier, lors de la détection d'un arrêt ou d'une baisse de performance, une source de défauts (f1, f2, f3) causant l'arrêt ou la baisse de performance à partir d'une liste de sources de défaut (34) stockée dans une mémoire (33),
l'installation d'emballage (1) étant en outre configurée pour afficher la source de défaut (f1, f2, f3) déterminée à l'intérieur du graphique de performance (53) sur l'écran (27), chaque moment de l'apparition d'une performance réduite ou d'un arrêt (t₁, t₃, t₄) étant associé à un affichage de la source de défaut (f1, f2, f3) reconnue comme étant la cause de celle-ci.

2. Installation d'emballage selon la revendication 1, **caractérisée en ce que** la section d'analyse de défauts (32) est configurée pour stocker un horodatage (t₁, t₃, t₄) en association avec un arrêt détecté ou une sous-performance détectée de l'installation d'emballage (1).

3. Installation d'emballage selon l'une des revendications précédentes, **caractérisée en ce que** le graphique de performance (35) comprend une représentation d'une performance de l'installation d'emballage (1) ou de la machine d'emballage (2) sur un axe temporel (t).

4. Installation d'emballage selon l'une des revendications précédentes, **caractérisée en ce qu'**au moins un capteur (29) est relié à l'unité de calcul (31).

5. Installation d'emballage selon l'une des revendications précédentes, **caractérisée en ce que** l'installation d'emballage (1) est configurée pour afficher des messages de défaut et/ou des avertissements sur l'écran (27).

6. Installation d'emballage selon l'une des revendications précédentes, **caractérisée en ce que** l'écran (27) est disposé sur ou dans la machine d'emballage (2).

7. Procédé pour faire fonctionner une installation d'emballage (1) avec une machine d'emballage (2) et au moins un composant (13, 14, 15) prévu en plus de la machine d'emballage (2), l'installation d'emballage (1) présentant en outre un écran (27) et une unité de calcul (31),
dans lequel un graphique de performance (35) est affiché sur l'écran (27),
dans lequel l'unité informatique (31) comprend une section d'analyse des défauts (32),
**caractérisé en ce qu'**une liste de sources de défaut (34) est stockée dans une mémoire (33),
**en ce que** la section d'analyse de défauts (32) identifie, lors d'un arrêt ou d'une baisse de performance de l'installation d'emballage (1), à partir de la liste de sources de défauts (34), une source de défauts (f1, f2, f3) provoquant l'arrêt ou la baisse de performance,
et **en ce que** la source de défaut (f1, f2, f3) déterminée est affichée à l'intérieur du graphique de puissance (35) sur l'écran (27), chaque moment de l'apparition d'une puissance réduite ou d'un arrêt (t₁, t₃, t₄) étant lié à un affichage de la source de défaut (f1, f2, f3) identifiée comme la cause de celle-ci.

8. Procédé selon la revendication 7, **caractérisé en ce que** la liste des sources de défaut (34) peut être éditée.

9. Procédé selon l'une des revendications 7 ou 8, **caractérisé en ce que** le graphique de performance (35) comprend une représentation d'une performance de l'installation d'emballage (1) ou de la machine d'emballage (3) sur un axe temporel (t).

10. Procédé selon l'une quelconque des revendications 7 à 9, **caractérisé en ce que** le graphique de puissance (35) est mis à jour de manière continue ou cadencée.

11. Procédé selon l'une quelconque des revendications 7 à 10, **caractérisé en ce que** des changements de recettes et/ou des modifications de paramètres sont indiqués dans le graphique de puissance (35) ou en même temps que celui-ci.

12. Procédé selon l'une quelconque des revendications 7 à 11, **caractérisé en ce que** le système indique et enregistre le moment de survenance d'un arrêt ou d'une baisse de puissance et/ou la période ou la durée d'un arrêt ou d'une baisse de puissance.
